# EUROPÄISCHE PATENTSCHRIFT

(11) **EP 3 399 119 B1**
(45) Veröffentlichungstag und Bekanntmachung des Hinweises auf die Patenterteilung: **14.04.2021**
(21) Anmeldenummer: 18170588.0
(22) Anmeldetag: 03.05.2018
(51) Int. Cl.: E04F 15/02, E04B 1/68, E04F 13/06

(54) **VORRICHTUNG ZUR DEHNFUGENVERKLEIDUNG ZWISCHEN MIT BELÄGEN VERKLEIDETEN FUSSBODENABSCHNITTEN**
DEVICE FOR CLADDING AN EXTENSION JOINT BETWEEN FLOOR SECTIONS CLAD WITH LININGS
DISPOSITIF DE RECOUVREMENT DES JOINTS DE DILATATION ENTRE DES SECTIONS DE PLANCHER DE SOL REVÊTUS DE REVÊTEMENTS

(30) Priorität: 03.05.2017 AT 5008317 U
(43) Veröffentlichungstag der Anmeldung: 07.11.2018
(73) Patentinhaber: Prossegger, Walfred, 9212 Techelsberg (AT)
(72) Erfinder: Prossegger, Walfred, 9212 Techelsberg (AT)
(74) Vertreter: Riebling, Peter

(56) Entgegenhaltungen:
- EP-A2- 0 165 611
- DE-A1-102014 111 172
- DE-U1-202013 001 750
- GB-A- 1 091 567
- US-B1- 6 374 559

## Beschreibung

Die vorliegende Erfindung betrifft eine Vorrichtung zur Dehnfugenverkleidung für den Übergang zwischen zwei nebeneinander liegenden Bodenbelagsschichten im Bereich einer Dehnungsfuge eines schwimmenden Estrichs im Innenbereich eines Gebäudes gemäß dem Oberbegriff von Patentanspruch 1.

Die erfindungsgemäße Vorrichtung eignet sich insbesondere für den Übergang zwischen zwei Kunststoffbelagsschichten. Selbstverständlich kann das Übergangsprofil aber auch mit allen anderen Bodenbelägen Anwendung finden.

Die Herstellung dauerhaft rissfreier Beläge auf schwimmenden Estrichen bzw. auf Heizestrichen in niedrigen Schichtdicken, wie sie für den Innenbereich üblich sind, wird üblicherweise dadurch hergestellt, dass die Bewegungsfuge des Belages direkt über der Dehnungsfuge des schwimmenden Estrichs zu liegen kommt. Der Kantenschutz des Belages an der Dehnungsfuge wird hier üblicherweise mit einer Metallkantenschiene bewirkt, um eine mechanische Beschädigung der Belagskante zu vermeiden. Auftretende Lasten werden durch die Konstruktion des Profils in den Belag und insbesondere in den Untergrund abgeleitet.

Dabei tritt in Bereichen stärkerer Belastung, die z.B. durch Spitalsbetten, schwere Apparaturen auf Rollen oder sonstigen Flurförderverkehr sehr hoch beansprucht werden, das Problem auf, dass die Estrichbetonkante abbricht. Dieses Problem ist auch dadurch nicht zufriedenstellend zu lösen, dass der Auflagebereich der Profilkante vergrößert wird.

Aus der DE 100 08 944 A ist eine Vorrichtung zur Ausbildung von Bewegungsfugen zwischen auf einem Rohboden verlegten Bodenbelagsfeldern bekannt, bei der jeweils Begrenzungsprofile an den die Fuge begrenzenden Bodenbelagskanten bzw. im entsprechen- den Befestigungsmörtel angebunden sind, wobei beide Begrenzungsprofile parallel zu den Bodenbelagsfeldern schiebend miteinander verbunden sind, wobei die beiden Bewegungsprofile etwa im Querschnitt U-förmig ausgebildet sind.

Solche Begrenzungsprofile sind jedoch nur dort einsetzbar, wo auf Rohböden, beispielsweise Betonböden, Fließen, Naturstein, Terrazzo-Beläge, Estriche bzw. entsprechende Beläge auf Mörtelbetten oder Klebeschichten auf diesen Rohböden verlegt werden sollen.

Für auf schwimmendem Estrich verlegte Bodenbeläge sind diese Begrenzungsprofile nicht verwendbar.
Ein Kantenbruch des Estrichs an der Dehnungsfuge lässt sich nur vermeiden, indem der zum Estrichbeton abgeleitete Druck der Rollen an den Kanten des Bodenbelages über ein größeres Flächenmaß des Estrichbetons abgeleitet wird und damit Abplatzungen an der Betonkante vermieden werden. Dabei ist jedoch zu beachten, dass die gegenseitige seitliche Verschiebbarkeit für beispielsweise unterschiedliche thermische Ausdehnungen von Estrichbeton und Bodenbelag uneingeschränkt erhalten bleiben muss und die Belagskanten zuverlässig vor einem vorzeitigen Verschleiß zu schützen sind.

Aus der AT 8917 U1 ist eine Vorrichtung zur Ausbildung von Bewegungsfugen für den Stoßbereich zweier nebeneinander liegender Bodenbeläge auf schwimmendem Estrich bekannt, welche aus zwei metallischen Elementen besteht, die im Kantenbereich zweier aneinander grenzender Estrichbetonplatten montiert sind und im montierten Zustand gegeneinander in waagrechter Richtung entlang zweier Berührungsflächen verschiebbar sind. Dabei ist jedes Element im wesentlichen plattenförmig ausgebildet und besitzt einen angeformten Steg, welcher bündig mit dem Bodenbelag abschließt. Diese Vorrichtung ist zur Befestigung am Estrich mittels Ankleben und Schrauben, welche in Durchbrüche eingreifen, gedacht. Zwischen den beiden Stegen befindet sich ein Spalt, welcher in seiner Ausdehnung im Wesentlichen der Ausdehnung der Bewegungs- fuge entspricht. Nachteilig bei dieser Vorrichtung ist, dass beim Verkleben ein Teil des Klebers in den für die Gleitbewegung vorgesehenen Leerraum unterhalb eines der beiden metallischen Elemente eindringen kann, wo- durch sich beim Übereinander Schieben der beiden Elemente diese vom Untergrund abheben.

Um das Eintreten von Feuchtigkeit, beispielsweise durch schmutzbeladenes Wischwasser oder dgl. in die Dehnungsfuge zu verhindern ist es bereits bekannt, diesen Spalt mit einer gummielastischen Abdeckleiste zu füllen, wie sie beispielsweise aus der DE 1 509 895 A hervor geht. Die darin geoffenbarten Abdeckleisten weisen eine oftmals komplizierte Profilierung auf. In der Folge wurden diese Profile immer mehr vereinfacht und bestehen bei jüngsten Entwicklungen, wie beispielsweise in der EP 2 476 809 A veröffentlicht - aus einem Fugenband oder einer einfachen Einlage mit quadratischem oder rechteckigem Querschnitt. Diese Einlagen können jedoch keine hundertprozentige Abdichtung gewährleisten, sondern es kommt abhängig von der Fugenbreite, die sich durch unterschiedliche Dehnungskoeffizienten der eingesetzten Materialien ergibt - zu einem mehr oder weniger starken Eindringen von Kapillarwasser, welches den Fugenuntergrund durchfeuchtet und die Festsetzung von biologischen Verunreinigungen, wie Bakterien, Pilzen und dgl. begünstigt.

Ein weiteres Problem stellen feinste Feststoffpartikel dar, welche in den Fugenraum eindringen können, da sie das aneinander vorbei gleiten der Dehnfugenprofile verunmöglichen können, wodurch sich eben- falls die Dehnfugenprofile vom Untergrund abzuheben beginnen.

Eine Lösung, die die oben dargestellten Probleme teilweise vermeidet, ist in der DE 20 2013 001 750 U beschrieben. Durch ein teleskopisches Ineinandergreifen von Schenkeln der Profile ist eine Beweglichkeit in der Ebene des Fußbodenbelags gegeben. Nach wie vor besteht jedoch das Problem der Abnutzung oder Zerstörung der Kanten der Fußbodenbeläge bei starker Belastung und es ist schwierig, eine geeignete und dauerhafte Abdichtung zu gewährleisten.

Bei der GB 1 091 567 A1 handelt es sich um eine Dehnfugenverkleidung im Bereich einer Dehnungsfuge eines Rohfußbodens. Die Dehnfugenverkleidung ist in einem aus Beton bestehenden Rohfußboden eingegossen, was mit erheblichem Aufwand verbunden ist. Im Rohfußboden sind zwei spiegelsymmetrisch zur Dehnungsfuge ausgerichtete Schienen eingegossen, die in einen in Längsrichtung und parallel zur Dehnfuge verlaufenden Kanal münden und dort mit zwei jeweils einander gegenüberliegenden Winkelprofilschienen verschraubt sind. In der rechten Winkelprofilschiene, die im Rohfußboden versenkt eingelassen ist, ist ein Abdeckstreifen gelenkig befestigt, der mit einer abgewinkelten Ecke in einer Aufnahmenut der einen Profilschiene gelenkig aufgenommen ist.

Damit besteht der Nachteil, dass der Überbrückungsstreifen lediglich dazu geeignet ist, das zur Auffüllung der Dehnfuge verwendete dauerelastische Material nach unten hin abzustützen. Der Überbrückungsstreifen weist keine lastübertragenden Eigenschaften auf. Es handelt sich lediglich um ein streifenförmiges Abdeckteil, welches zum einen die Aufgabe hat, das die Dehnfuge ausfüllende Kunststoffmaterial nach unten hin abzustützen und ferner eine Überbrückung der Dehnungsfuge auch bei Ausdehnung oder Verengung der Dehnungsfuge zu ermöglichen.

Eine Montage auf der Oberfläche eines schwimmenden Estrichs der auf einem Rohfußboden schwimmend gelagert ist, ist in dieser Druckschrift nicht angesprochen. Nachdem die Winkelprofilschienen eine Verankerung im Rohfußboden benötigen, ist eine solche Dehnfugenverkleidung nicht bei einem auf dem Rohfußboden schwimmend gelagerten Estrich anwendbar. Das Problem des Schutzes dünner Kanten eines schwimmenden Estrichs bei Auftreten von Punktbelastungen spielt bei dieser Druckschrift keine Rolle, weil es sich um relativ dicke Betonplatten handelt, die ein Eingießen von Profilschienen voraussetzen.

Die DE 20 2013 001 750 U1 offenbart auf jeder Estrichseite drei unterschiedliche Profile. Ein zweites Schienenteil ist mit Kontaktflächen in eine Durchbrechungen aufweisendes erstes Schienenteil eingehängt und kann deshalb keine Lastübertragung von dem ersten Schienenteil auf das zweite Schienenteil ermöglichen. Bei einer Punktbelastung des rechten Schienenteils weicht die Einhängeverbindung mit ihren Kontaktflächen gelenkig in Richtung zum zweiten Schienenteil aus. Somit kann keine Last auf die der Estrichfuge gegenüberliegende Profilschiene übertragen kann.

Bei der EP 0 165 611 A2 handelt es sich um eine Dehnungsschiene mit einem Dichtungsprofil zum Abdichten. Es sind keine seitlichen Verlängerungen mit Durchbrüchen vorhanden. Somit ist eine Lastübertragung von der linken Profilseite auf die rechte Profilseite nicht möglich.

Die DE 10 2014 111 172 A1 zeigt als die Dehnfuge überbrückendes Brückenelement ein Dichtungsprofil bei dem jeweils widerhakenartige Profile in zugeordnete Aufnahmen von sich gegenüberliegenden Profilschienen eingreifen. Eine Lastübertragung ist über das elastische Dichtungsprofil nicht möglich und nicht vorgesehen.

Bei der US 6,374,559 B1 handelt es sich um eine Dehnfugenverkleidung für den Übergang zwischen zwei nebeneinander liegenden Abschnitten eines Bodenbelages. Eine Lastübertragung von der linken Profilseite des Profils über einen Schenkel auf die rechte Profilseite ist nicht möglich, weil der Profilschenkel ist in einem elastischen U-förmig profilierten Kunststoffteil besteht und das Kunststoffteil lediglich Abdichtzwecken dient.

Die vorliegende Erfindung stellt sich daher ausgehend von der GB 1 019 567 A1 die Aufgabe eine Dehnfugenverkleidung für den Übergang zwischen zwei nebeneinander liegenden Bodenbelagsschichten im Bereich einer Dehnungsfuge eines schwimmenden Estrichs zu schaffen, welcher die genannten Nachteile des Standes der Technik zuverlässig vermeidet, eine sehr geringe Einbautiefe besitzt, eine wirkungsvolle wasserdichte Abdichtung der Dehnungsfuge gewährleistet, einen wirksamen Schutz gegen den Kantenbruch des Estrichbetons bei hoher Punktbelastung darstellt, einfach in der Herstellung ist und einfach in der Anwendung bei der Herstellung eines wasser- und staub- dichten Belagsbodens im Bereich von Dehnungsfugen des schwimmenden Estrichs ist.

Diese Aufgaben werden durch eine Vorrichtung zur Dehnfugenverkleidung für den Übergang zwischen zwei nebeneinander liegenden Bodenbelagsschichten im Bereich einer Dehnungsfuge eines schwimmenden Estrichs gelöst, welche die technischen Merkmale des Anspruchs 1 aufweist. Vorteilhafte Weiterbildungen der Erfindung sind Gegenstand der abhängigen Ansprüche.

Die erfindungsgemäßen Elemente sind besonders robust, weil sie Winkelprofile aufweisen, die einerseits vom Fußbodenbelag überdeckt sind und andererseits einen Abschluss des Fußbodenbelags bilden.
Durch ihre einstückige Ausbildung wird eine hohe mechanische Belastbarkeit erzielt. Gleichzeitig bilden die senkrechten Erstreckungen eine Nut, die optimal für die Einbringung eines Dichtelements ist.

Die erfindungsgemäße Vorrichtung zur Dehnfugenverkleidung wird nachstehend anhand der Figuren näher erläutert. Darin zeigt:
Fig. 1 eine Stirnansicht eines Abschnitts eines Estrichs mit einer Dehnungsfuge und aufgesetzten Dehnfugenverkleidung;
Fig. 2 die Schrägansicht einer Dehnfugenverkleidung mit eingebrachter Abdichtungsmasse; und

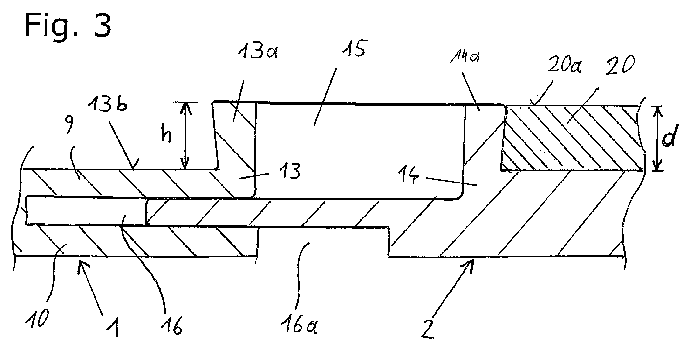

Fig. 3 ein Detail von Fig. 1 im Schnitt.

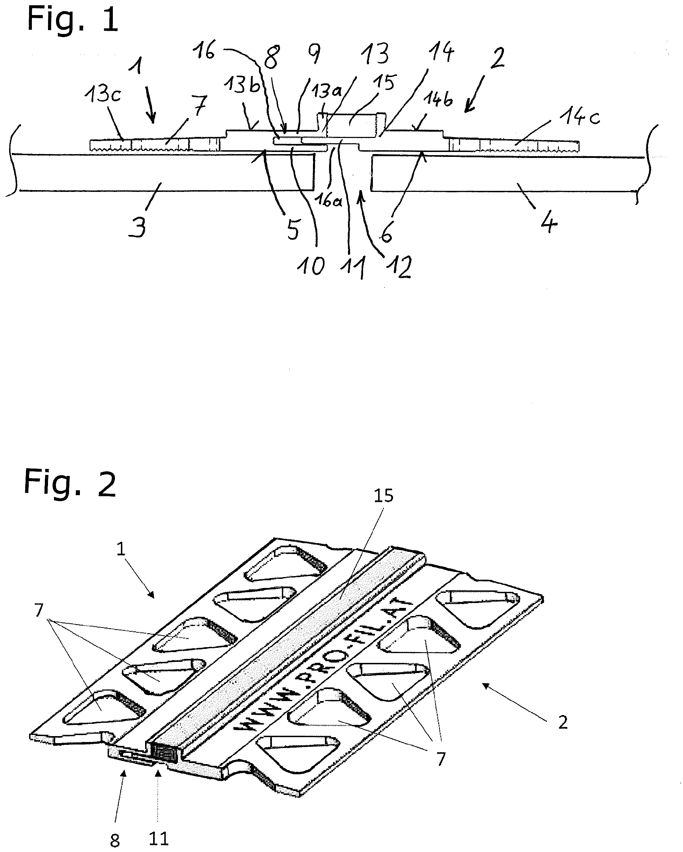

Die in Fig. 1 ersichtliche Dehnfugenverkleidung besteht aus zwei Elementen 1 und 2, die jeweils im Kantenbereich der Betonplatten eines Estrichs 3 und 4 aufliegen und diesen Kantenbereich großflächig bedecken, wodurch auftretende Punktbelastungen über einen großen Bereich des Estrichs 3, 4 verteilt werden. Dadurch wird der Kantenbereich des Estrichs 3, 4 vor Kantenbruch geschützt. Die ersten Auflageflächen 5 und 6 der Elemente 1 und 2 weisen eine Vielzahl flächiger Durchbrüche 7 auf, wie aus Fig. 2 ersichtlich, in welche der Montagekleber eindringen und dadurch zu einer zusätzlichen Stabilisierung gegen seitliche Verschiebung beitragen kann.

Das im Wesentlichen flächige Element 1 besitzt einen Abschnitt 8, welcher im Querschnitt gabelförmig unter Bildung von zwei Schenkeln 9 und 10 ausgestaltet ist. In den von den Schenkeln 9 und 10 begrenzten Innenraum gleitet ein zungenartig ausgebildeter Abschnitt 11 des Elementes 2 in einem Ausmaß entsprechend der Verengung oder Dehnung der Dehnfuge 12 zwischen den beiden Betonplatten des Estrichs 3 und 4.

Am Element 1 ist randständig am Schenkel 9 ein Winkelprofil 13 angeformt. Dieses korrespondiert mit einem Winkelprofil 14, welches am Element 2 im Nahbereich zum zungenartig ausgebildeten Abschnitt 11 angeformt ist. Die Winkelprofile 13, 14 besitzen jeweils eine nach oben ragende Höhenerstreckung 13a, 14a. Die Höhe h der Höhenerstreckung 13a, 14a entspricht im Wesentlichen der Dicke d des Fußbodenbelags 20. Dadurch wird in erfindungswesentlicher Weise erreicht, dass die Höhenerstreckungen 13a, 14a oben mit der Oberfläche 20a des Bodenbelags 20 fluchten und diesen an der Kante abschließen. Auch wesentlich im Sinn der Erfindung ist, dass die Höhenerstreckungen 13a, 14a Teile der Winkelprofile 13, 14 sind und daher mechanisch robust verankert sind.

Seitlich neben den Höhenerstreckungen 13a, 14a bilden die Winkelprofile 13, 14 zweite Auflageflächen 13b, 14b aus, auf denen der Bodenbelag 20 aufliegt. Seitlich neben den zweiten Auflageflächen 13b, 14b sind abgesenkte Randbereiche 13c, 14c vorgesehen, die es ermöglichen, dass der Montagekleber, mit dem die Elemente 1, 2 am Estrich 3, 4 befestigt sind, in beschränktem Ausmaß durch die Durchbrüche 7 nach oben treten kann, ohne Verwerfungen des Bodenbelags 20 zu verursachen.

Der von den Winkelprofilen 13, 14 und dem Abschnitt 11 begrenzte Raum wird mit einer hochelastischen, hydrophoben, formbaren Abdichtmasse 15 befüllt, welche bei ihrem Eintrag in diesen Hohlraum eine haftende Verbindung mit den Winkelprofilen 13 und 14 eingeht.

Der veränderliche, horizontale Abstand zwischen den Winkelprofilen 13 und 14 ist bevorzugt größer als der horizontale erste Bewegungsbereich 16 zwischen den Elementen 1 und 2, der durch den Raum zwischen den Schenkeln 9, 10 definiert ist.

In einer bevorzugten Ausführung liegt - wie in Fig. 1 gezeigt - ein zweiter Bewegungsbereich 16a direkt über der Dehnfuge 12 und der erste Bewegungsbereich 16 ist seitlich versetzt zur Dehnfuge 12. Der erste Bewegungsbereiche 16 entspricht in seiner horizontalen Erstreckung dem zweiten Bewegungsbereich 16a den der zungenartig ausgebildeter Abschnitt 11 des Elementes 2 zwischen den beiden Schenkeln 9 und 10 des Elementes 1 zur Verfügung hat. Dabei ist von besonderem Vorteil, dass sich beide Bewegungsbereiche 16 und 16a unterhalb des dichtend abgeschlossenen, von den Winkelprofilen 13, 14 und dem Abschnitt 11 begrenzten Raumes befinden, da der Eintritt von Staubpartikeln oder Feuchtigkeit damit ausgeschlossen ist und daher keine Störungen der Gleitbewegung des zungenartigen Ab- schnitts 11 zwischen den Schenkeln 9 und 10 und keine Durchfeuchtung des Estrichs stattfinden kann. Ein weiterer Vorteil liegt darin, dass sich kein Klebstoff innerhalb der Bewegungsbereiche 16, 16a ablagern kann.

Durch die Gleitbewegung des zungenartigen Abschnitts 11 zwischen den U-förmigen Schenkeln 9 und 10 ist darüber hinaus auch gewährleistet, dass die Formstabilität der Dehnfugenverkleidung bei Punktbelastung erhalten bleibt. Auch bei einem Ineinander-Gleiten der beiden Elemente 1 und 2 kann es zu keinem Abheben der Dehnfugenverkleidung von der Dehnfuge kommen.

Die in den Raum zwischen den Schenkeln 9 und 10 und dem zungenartigen Abschnitt 11 einzubringende, hochelastische und während des Einbringvorgangs formbare Polymermasse wird vorteilhafterweise farblich an den Bodenbelag angepasst und bildet mit dem Belag eine bündige und dichte Verbindung, welche dadurch optisch kaum vom restlichen Bodenbelag 20 zu unterscheiden ist.

Die besonderen Vorteile der vorliegenden Dehnfugenverkleidung für den Übergang zwischen zwei nebeneinander liegenden Bodenbelagsschichten im Bereich einer Dehnungsfuge eines schwimmenden Estrichs liegen darin, dass sie eine sehr geringe Einbautiefe von maximal 4,5 mm besitzt, eine wirkungsvolle wasserdichte Abdichtung der Dehnungsfuge gewährleistet, einen wirksamen Schutz gegen den Kantenbruch des Estrichbetons bei hoher Punktbelastung darstellt, einfach in der Herstellung ist und einfach in der Anwendung bei der Herstellung des wasser- und staubdichten Belagsbodens im Bereich von Dehnungsfugen des schwimmenden Estrichs ist.

## Patentansprüche

1. Vorrichtung zur Dehnfugenverkleidung für den Übergang zwischen zwei nebeneinander liegenden Abschnitten eines Bodenbelags (20) im Bereich einer Dehnfuge (12) zwischen Betonplatten (3, 4) eines schwimmenden Estrichs im Innenbereich eines Gebäudes, welche Vorrichtung aus einem ersten und einem zweiten Element (1, 2) besteht, die miteinander zur Abdeckung der Dehnfuge (12) korrespondieren und jeweils im Kantenbereich von Betonplatten (3,4) des Estrichs aufliegen und diesen Kantenbereich jeweils großflächig mittels erster Auflageflächen (5, 6) bis über die Betonkanten hinaus bedecken, wobei das erste Element (1) endständig einen Abschnitt (8) besitzt, welcher im Querschnitt gabelförmig ausgebildete Schenkel (9, 10) hat, wobei das zweite Element (2) endständig einen zungenartig ausgebildeten Abschnitt (11) hat, der in den von den Schenkeln (9, 10) begrenzten Innenraum von Abschnitt (8) in dem Ausmaß gleitet, in dem sich die Dehnfuge (12) verengt oder dehnt, wobei am freien Ende vom Schenkel (9) des ersten Elements (1) ein erstes Profil (13) und im Nahbereich zum zungenartigen Abschnitt (11) des zweiten Elements (2) ein zweites Profil (14) ausgebildet ist und die beiden Profile (13, 14) dazu ausgebildet sind, mit der Oberfläche (20a) des Bodenbelages (20) bündig abzuschließen, wobei zwischen den beiden Profilen (13, 14) ein Leerraum gebildet ist, der mit einer Abdichtmasse (15) gefüllt ist,
wobei die beiden Profile (13,14) als Winkelprofile (13, 14) ausgebildet sind, derer Höhenerstreckungen (13a, 14a) dazu ausgebildet sind, mit der Oberfläche (20a) des Bodenbelages (20) bündig abzuschließen und den Leerraum zu bilden, der mit der Abdichtmasse (15) gefüllt ist,
wobei seitlich neben den Höhenerstreckungen (13a, 14a) die Winkelprofile (13, 14) zweite Auflageflächen (13b, 14b) ausbilden, auf denen der Bodenbelag (20) aufliegt **dadurch gekennzeichnet dass:**
- zur Dehnfugenverkleidung zwischen zwei Kunststoffbelagsschichten und zur Herstellung dauerhaft rissfreier Beläge auf schwimmenden Estrichen die ersten Auflageflächen (5, 6) eine Vielzahl flächiger Durchbrüche (7) aufweisen, in welche der Montagekleber eindringen und dadurch zu einer zusätzlichen Stabilisierung gegen seitliche Verschiebung beitragen kann,
- seitlich neben den zweiten Auflageflächen (13b, 14b) abgesenkte Randbereiche (13c, 14c) vorgesehen sind, die es ermöglichen, dass der Montagekleber, mit dem die Elemente (1, 2) am Estrich (3, 4) befestigt sind, in beschränktem Ausmaß durch die genannte Durchbrüche (7) nach oben treten kann, ohne Verwerfungen des Bodenbelags (20) zu verursachen.

2. Vorrichtung zur Dehnfugenverkleidung nach Anspruch 1, **dadurch gekennzeichnet, dass** der Leerraum zwischen den beiden Winkelprofilen (13, 14) mit der hochelastischen, hydrophoben, formbaren Abdichtmasse (15) befüllt ist und die Abdichtmasse (15) mit den senkrechten Erstreckungen (13a, 14a) der Winkelprofile (13, 14) eine haftende Verbindung eingeht.

3. Vorrichtung zur Dehnfugenverkleidung nach Anspruch 1 oder 2, **dadurch gekennzeichnet, dass** die Abdichtmasse (15) mit dem Bodenbelag (20) und den freien Abschnitten der Winkelprofile (13, 14) eine bündige und feuchtigkeitsdichte Verbindung bildet.

4. Vorrichtung zur Dehnfugenverkleidung nach einem der Ansprüche 1 bis 3, **dadurch gekennzeichnet, dass** die Dehnfugenverkleidung eine senkrechte Bauhöhe von maximal 4,5 mm, bevorzugt von weniger als 3 mm und insbesondere bevorzugt von lediglich 2 mm besitzt.

5. Vorrichtung zur Dehnfugenverkleidung nach Anspruch 1, **dadurch gekennzeichnet, dass** die Höhe (h) der senkrechten Erstreckungen (13a, 14a) der Winkelprofile (13, 14) ab den zweiten Auflageflächen (13b, 14b) der Dicke (d) des anzubringenden Fußbodenbelags entspricht.

6. Vorrichtung nach einem der Ansprüche 1 bis 5, **dadurch gekennzeichnet, dass** der veränderliche, horizontale Abstand zwischen den Winkelprofilen (13, 14) größer ist als ein erster horizontaler Bewegungsbereich (16) zwischen den Elementen (1, 2), der durch den Raum zwischen den Schenkeln 9, 10 definiert ist.

7. Vorrichtung nach Anspruch 6, **dadurch gekennzeichnet, dass** ein zweiter Bewegungsbereich (16a) direkt über der Dehnfuge (12) und der erste Bewegungsbereich (16) seitlich versetzt zur Dehnfuge (12) ist.

8. Vorrichtung nach Anspruch 6 und 7, **dadurch gekennzeichnet, dass** sich beide Bewegungsbereiche (16, 16a) unterhalb des dichtend abgeschlossenen, von den Winkelprofilen (13, 14) und dem Abschnitt (11) begrenzten Raumes befinden.

9. Vorrichtung nach einem der Ansprüche 1 bis 8, **dadurch gekennzeichnet, dass** eine hohe mechanische Belastbarkeit der Elemente (1,2) durch deren einstückige Ausbildung als Winkelprofile gegeben ist, die einerseits vom Fußbodenbelag überdeckt sind und andererseits einen Abschluss des Fußbodenbelags bilden.

## Claims

1. Device for expansion joint cladding for the transition between two sections of a floor covering (20) lying next to one another in the region of an expansion joint (12) between concrete slabs (3, 4) of a floating screed in the inner region of a building, which device consists of a first and a second element (1, 2) which correspond to one another to hide the expansion joint (12) and rest respectively in the edge region of concrete slabs (3, 4) of the screed and cover this edge region respectively over a large area by means of first bearing surfaces (5, 6) to beyond the concrete edges, wherein the first element (1) has on the end a section (8) which has limbs (9, 10) formed like a fork in cross-section, wherein the second element (2) has on the end a section (11) formed like a tongue which slides in the interior of section (8) limited by the limbs (9, 10) to the extent to which the expansion joint (12) narrows or expands, wherein a first profile (13) is formed on the free end of the limb (9) of the first element (1) and a second profile (14) is formed in the vicinity of the tongue-like section (11) of the second element (2) and the two profiles (13, 14) are formed to finish flush with the surface (20a) of the floor covering (20), wherein between the two profiles (13, 14), an empty space is formed which is filled with a sealing composition (15), wherein the two profiles (13, 14) are formed as angle sections (13, 14), the height extensions (13a, 14a) of which are formed to finish flush with the surface (20a) of the floor covering (20) and to form the empty space which is filled with the sealing composition (15), wherein laterally next to the height extensions (13a, 14a), the angle sections (13, 14) form second bearing surfaces (13b, 14b), on which the floor covering (20) rests for expansion joint covering between two plastic covering layers and for producing permanently crack-free coverings on floating screeds, the first bearing surfaces (5, 6) have a plurality of two-dimensional breaks (7) into which the installation adhesive can penetrate and thus contribute to additional stabilisation with respect to lateral displacement, laterally next to the second bearing surfaces (13b, 14b), lowered edge regions (13c, 14c) are provided which make it possible that the installation adhesive, with which the elements (1, 2) are attached on the screed (3, 4), can move upwards to a restricted extent through the said breaks (7) without causing faults in the floor covering (20).

2. Device for expansion joint cladding according to claim 1, **characterised in that** the empty space between the two angle sections (13, 14) is filled with the highly elastic, hydrophobic, mouldable sealing composition (15) and the sealing composition (15) makes an adhesive connection with the perpendicular extensions (13a, 14a) of the angle sections (13, 14).

3. Device for expansion joint cladding according to claim 1 or 2, **characterised in that** the sealing composition (15) forms a flush and moisture-tight connection with the floor covering (20) and the free sections of the angle sections (13, 14).

4. Device for expansion joint cladding according to one of claims 1 to 3, **characterised in that** the expansion joint covering has a perpendicular overall height of maximum 4.5 mm, preferably of less than 3 mm and particularly preferably of only 2 mm.

5. Device for expansion joint cladding according to claim 1, **characterised in that** the height (h) of the perpendicular extensions (13a, 14a) of the angle sections (13, 14) corresponds to the thickness (d) of the floor covering to be attached starting from the second bearing surfaces (13b, 14b).

6. Device according to one of claims 1 to 5, **characterised in that** the variable, horizontal distance between the angle sections (13, 14) is greater than a first horizontal movement region (16) between the elements (1, 2) which is defined by the space between the limbs (9, 10).

7. Device according to claim 6, **characterised in that** a second movement region (16a) is directly above the expansion joint (12) and the first movement region (16) is laterally offset to the expansion joint (12).

8. Device according to claim 6 and 7, **characterised in that** both movement regions (16, 16a) are located below the space finished in sealed manner and limited by the angle sections (13, 14) and the section (11).

9. Device according to one of claims 1 to 8, **characterised in that** a high mechanical load-bearing capacity of elements (1, 2) is provided by their integral design as angle sections which on the one hand are covered by the floor covering and on the other hand form an end to the floor covering.

## Revendications

1. Dispositif de revêtement de joints de dilatation pour la transition entre deux sections situées côte à côte d'un dallage (20) dans la zone d'un joint de dilatation (12) entre des plaques de béton (3, 4) d'une chape flottante dans la zone intérieure d'un bâtiment, lequel dispositif se compose d'un premier et d'un deuxième élément (1, 2) qui correspondent l'un à l'autre pour recouvrir le joint de dilatation (12) et sont posés respectivement dans la zone de bord de plaques de béton (3, 4) de la chape et couvrent respectivement cette zone de bord sur une grande surface à l'aide de premières surfaces d'appui (5, 6) en dépassant des bords de béton, dans lequel le premier élément (1) possède côté extrémité une section (8) qui a des branches (9, 10) en forme de fourche en coupe transversale, dans lequel le deuxième élément (2) a côté extrémité une section (11) formée à la manière d'une languette qui glisse dans l'espace intérieur, limité par les branches (9, 10), de la section (8) dans la mesure où que le joint de dilatation (12) se rétrécit ou se dilate, dans lequel à l'extrémité libre de la branche (9) du premier élément (1) est formé un premier profilé (13) et dans la zone proche de la section du type à languette (11) du deuxième élément (2) est formé un deuxième profilé (14) et les deux profilés (13, 14) sont formés pour être de niveau avec la surface (20a) du dallage (20),
dans lequel entre les deux profilés (13, 14) est formé un espace vide qui est rempli avec une masse d'étanchéité (15),
dans lequel les deux profilés (13, 14) sont formés comme des cornières (13, 14) dont les extensions en hauteur (13a, 14a) sont formées pour être de niveau avec la surface (20a) du dallage (20) et former l'espace vide qui est rempli avec la masse d'étanchéité (15), dans lequel latéralement près des extensions en hauteur (13a, 14a), les cornières (13, 14) forment des deuxièmes surfaces d'appui (13b, 14b) sur lesquelles le dallage (20) est posé, **caractérisé en ce que :**
pour le revêtement de joints de dilatation entre deux couches de revêtement en matière plastique et pour fabriquer des revêtements durablement sans fissures sur des chapes flottantes, les premières surfaces d'appui (5, 6) présentent une multiplicité d'ouvertures planes (7) dans lesquelles la colle de montage peut pénétrer et contribuer ainsi à une stabilisation supplémentaire à l'encontre d'un glissement latéral, latéralement à côté des deuxièmes surfaces d'appui (13b, 14b) sont prévues des zones de bord (13c, 14c) abaissées qui permettent que la colle de montage avec laquelle les éléments (1, 2) sont fixés à la chape (3, 4) puisse dans une mesure limitée entrer vers le haut à travers lesdites ouvertures (7) sans provoquer de gauchissement du dallage (20).

2. Dispositif pour le revêtement de joints de dilatation selon la revendication 1, **caractérisé en ce que** l'espace vide entre les deux cornières (13, 14) est rempli avec la masse d'étanchéité (15) à élasticité élevée, hydrophobe, ductile, et la masse d'étanchéité (15) avec les extensions en hauteur verticales (13a, 14a) des cornières (13, 14) subit une liaison adhésive.

3. Dispositif pour le revêtement de joints de dilatation selon la revendication 1 ou 2, **caractérisé en ce que** la masse d'étanchéité (15) forme avec le dallage (20) et les sections libres des cornières (13, 14) une liaison de niveau et étanche à l'humidité.

4. Dispositif pour le revêtement de joints de dilatation selon l'une des revendications 1 à 3, **caractérisé en ce que** le revêtement de joints de dilatation a une hauteur de construction verticale de 4,5 mm au maximum, de préférence de moins de 3 mm et particulièrement de préférence de 2 mm seulement.

5. Dispositif pour le revêtement de joints de dilatation selon la revendication 1, **caractérisé en ce que** la hauteur (h) des extensions verticales (13a, 14a) des cornières (13, 14) à partir des deuxièmes surfaces d'appui (13b, 14b) correspond à l'épaisseur (d) du dallage à poser.

6. Dispositif selon l'une des revendications 1 à 5, **caractérisé en ce que** l'écartement horizontal variable entre les cornières (13, 14) est plus grand qu'une première zone de mouvement horizontale (16) entre les éléments (1, 2) qui est définie par l'espace entre les branches 9, 10.

7. Dispositif selon la revendication 6, **caractérisé en ce qu'**une deuxième zone de mouvement (16a) est directement au-dessus du joint de dilatation (12) et la première zone de mouvement (16) est décalée latéralement par rapport au joint de dilatation (12).

8. Dispositif selon les revendications 6 et 7, **caractérisé en ce que** les deux zones de mouvement (16, 16a) se trouvent au-dessous de l'espace fermé de manière étanche limité par les cornières (13, 14) et la section (11).

9. Dispositif selon l'une des revendications 1 à 8, **caractérisé en ce qu'**une capacité de charge mécanique élevée des éléments (1, 2) est donnée par leur forme d'un seul tenant comme cornières qui d'une part sont recouvertes par le dallage et d'autre part forment une terminaison du dallage.
